Europäisches Patentamt

European Patent Office

Office européen des brevets

(11) Publication number : **0 542 544 A2**

(12) **EUROPEAN PATENT APPLICATION**

(21) Application number : 92310338.6

(22) Date of filing : 12.11.92

(51) Int. Cl.$^5$ : **B41J 2/475**

(30) Priority : 13.11.91 JP 297465/91

(43) Date of publication of application :
19.05.93 Bulletin 93/20

(84) Designated Contracting States :
AT BE CH DE DK ES FR GB GR IE IT LI LU MC
NL PT SE

(71) Applicant : IMPERIAL CHEMICAL
INDUSTRIES PLC
Imperial Chemical House, Millbank
London SW1P 3JF (GB)

(72) Inventor : Kaneko, Akinari
12 Skelton Close, Lawford
Manningtree, Essex CO11 2HT (JP)
Inventor : Hitomi, Chiyoji
14-20 Ninomiya-3-chome
Tsukuba-shim, Ibaragi-ken (JP)
Inventor : Hoshikawa, Jun
5-51 Manabe-6-chome
Tsuchiura-shi, Ibaragi-ken (JP)

(74) Representative : Graham, John George et al
ICI Group Patents Services Dept. PO Box 6
Shire Park Bessemer Road
Welwyn Garden City Herts, AL7 1HD (GB)

(54) Laser printer and thermal transfer printing method.

(57) A laser printer for use in thermal melt transfer printing having a polygon mirror and a high output laser source and a method of thermal melt transfer printing method using such printers are disclosed.

Fig.1.

EP 0 542 544 A2

This invention relates to a laser printer and its use in thermosensitive recording, in particular to a laser printer having a high recording speed with high precision and high resolution and thermal transfer printing method, in particular to thermal melt transfer printing.

In recent years, thermal melt transfer printing record systems have found widespread use in recording an image, for example a letter, a figure, etc on a receiver sheet. Thermal melt transfer printing record systems involve providing a source of heat in a localised region on an ink sheet to effect transfer. Two methods have been proposed to provide the heat source. One is a method which employs a thermal printer using a thermal head as the heat source, and the other one is a method which employs a laser printer using a laser beam as the heat source.

Thermal printers may be employed to record images on plain paper, which have good light fastness, stability and conservation characteristics. Such printers also have good reliability and have a relatively simple record mechanism, and have found use as thermal transfer printers, facsimile machines, copiers and the like. However, in order to record an image with a high precision and high resolution image using a thermal printer, the heat element of the thermal head has to be very small and, further, fine control of heat generation from the heat element may be difficult to achieve. Thus problems with the production and the control of the thermal head have been encountered where high resolution images are required. Moreover, there is a problem in producing a line head comprising many heat elements in order to increase the speed of printing an image whilst maintaining the high precision and the high resolution.

On the other hand, laser printers, are capable of producing a record image with high precision and high resolution using a laser beam as the heat source, since the converging spot of the laser can be focused to a very small diameter. The recording medium which is irradiated by the laser beam suitably comprises an ink sheet having either a transfer ink layer and a laser beam heat conversion layer having a material which converts the laser light into heat or alternatively an ink layer which also contains a material for converting the laser light into heat. In the past, a semiconductor laser beam source, having an output of, for example 40 mW has been employed but has not provided sufficient record speed because of the low output. For example, when irradiating a thermal melt transfer colour ink sheet as disclosed in Japan Patent Application No 218833 in 1991, using a laser beam having an output of 38 mW, it took at least 15 hours to obtain a monochrome record sample of a B5 size.

Other types of laser include excimer, YAG and argon lasers in addition to the semiconductor, but they can not typically be modulated at a high frequency of 100 kHz or more. And if an argon laser with a high output is used, the modulation circuit and the laser itself become large and expensive, and are thus not suitable for application in laser printers.

Consequently, there is a requirement for a printer having a more rapid record speed such that the record time is shorter than hitherto for example not more than 10 minutes using a semiconductor laser, and which provides a high precision and high resolution record image.

This invention aims to solve the problems as described above, and to provide a laser printer having a high record speed with a high precision and a high resolution without increasing the size of the printer itself.

The laser printer of this invention is characterised in that a recording medium is heated by a laser beam to transfer to a receiver by means of at least one high output semiconductor laser beam source, preferably having an output of at least 100 mW and at least one polygon mirror scanning apparatus. If desired the scanning width of the polygon mirror is smaller than the print width then a plurality of mirrors may be employed and the sum total of the scanning widths of the plurality of polygon mirrors is suitably at least the print width. Furthermore, the recording medium is desirably a thermal melt transfer inksheet.

The invention further provides a method of thermal melt transfer printing which comprises placing a thermal melt transfer ink sheet comprising a substrate having an ink layer on one side in register with a receiver sheet with the ink layer facing the receiver sheet, heating pre-determined portions of the ink layer by means of a laser beam which is moveable relative to the ink sheet by means of a scanning polygon mirror in response to a pre-determined signal to effect thermal melt transfer of said portions of the ink layer to the receiver sheet wherein the laser beam is produced by a high output semi-conductor laser beam source.

The invention is illustrated by way of example in the drawings in which:

Figure 1 is a schematic diagram of a printer according to the invention.

Figure 2 is a cross section diagram to show the ink sheet and receiver sheet before transfer;

Figure 3 is a cross section diagram to show the ink sheet and receiver sheet after transfer;

Figure 4 is a log-log graph to show the relationship between the energy required to give an ink transfer of a 50μm dot size and the laser power;

Figure 5 is a schematic diagram to show a different example of a printer according to this invention;

Figure 6 is a schematic diagram to show a different example of a printer according to this invention;

Figure 7 is a schematic diagram to show a different example of a printer according to this invention.

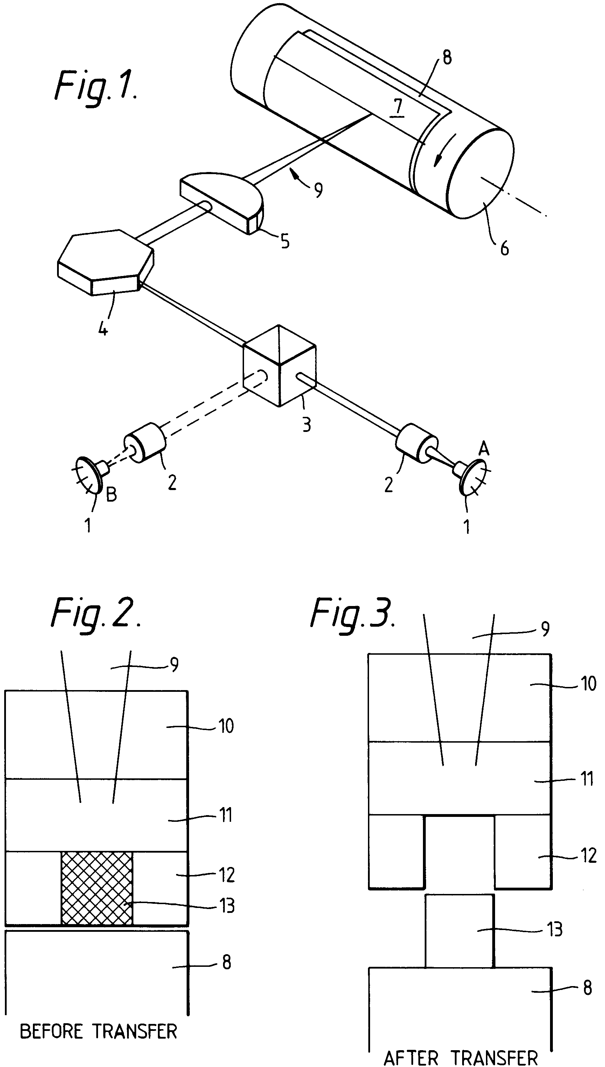

In figure 1, a semiconductor laser A and a semiconductor laser B (both are shown as 1.) are the beam sources, the beams from these sources are passed through collimator lenses 2 the collimated beams are combined by a polarisation beam splitter 3 to produce a laser beam. The laser beam is scanned by a polygon mirror 4, the scanned beam is converged by a scanning lens 5 and a spot of the same shape is produced on a recording medium 7. The recording medium is in contact with a receiver sheet or a receiver paper 8 which is pressed on a drum 6 and a scanning of the secondary scanning direction is carried out by a rotation of the drum 6. Parts of the transfer ink layer of the recording medium 7 are melted by the laser beam which is irradiated onto the recording medium 7 and converged in a spot, and the required record is produced on the receiver sheet (receiver paper) 8.

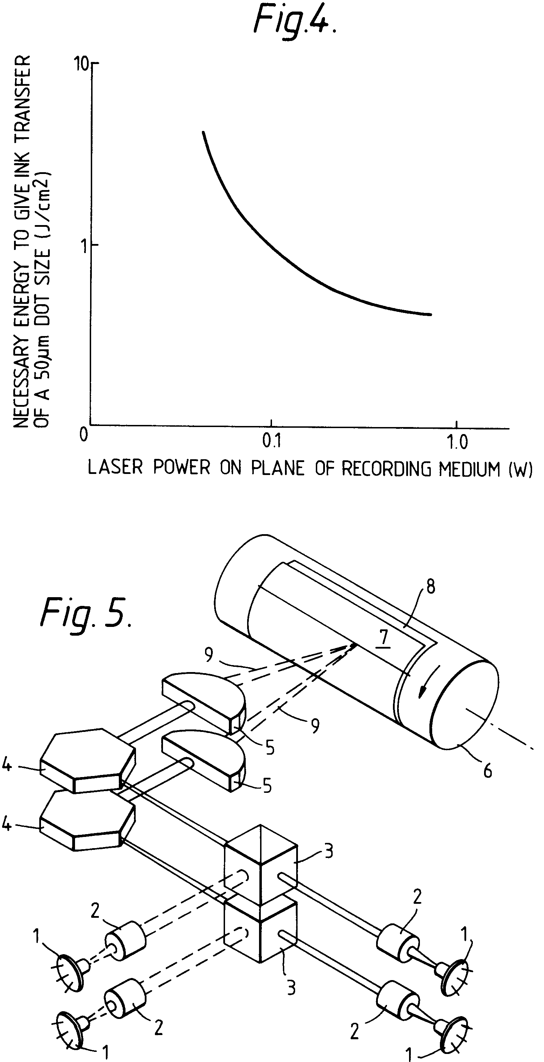

Referring to figures 2 and 3, the recording medium 7 is suitably composed of a support 10 which is substantially transparent to the laser beam, a laser beam heat conversion layer 11 and an ink layer 12. The recording medium is irradiated by the laser beam 9 and a laser light absorbing material in the laser beam heat conversion layer 11 absorbs the beam and generates the heat. The laser beam heat conversion layer 11 is suitably interposed between the support 10 and the ink layer 12. It is preferable that the thermal conductivity of the ink layer 12 is higher than that of the support 10 in order to effectively use the thermal energy produced by laser absorption. A melted part of the ink layer 13 is transferred to the receiver sheet (receiver paper) 8 as shown in figure 3. Since all of the support 10, the laser beam heat conversion layer 11 and the ink layer 12 are thin films, thermal diffusion of the heat in the plane of the layers (a direction parallel to the plane) is relatively small, and thus a small dot substantially equal in area to the irradiation spot diameter of the laser beam may be heated providing a record with high precision and high resolution.

The semiconductor lasers A and B suitably have an output of 100 mW or more at wavelength of 700 nm - 900 nm. For example, LQ (P) 05 (output 500 mW) from STC (UK), SDL-5400 series (output 100 mW), SDL-5311 (100 mW) and SDL-2530 (500 mW) of SDL from USA, can be used.

By using a high output laser of for example 100 mW or more, an unexpected shortening of the record time, that is, a high record speed can be achieved using the printer shown in the aforementioned Figure 1. A pulse width to provide a 50 μm dot size was measured by changing the output of the semiconductor laser, using the thermal melt transfer colour inksheet described in Japanese Patent application No., 218833 in 1991.

The results obtained were shown in figure 4. In figure 4, the necessary energy for the ink transfer to give the 50 μm dot size, (laser power x pulse width/dot size), is shown on the vertical axis and the horizontal axis shows the laser power on the plane of the recording medium. The graph of figure 4 shows that the necessary energy to effect recording is sharply dropped if the laser power is increased. In other words, the record time can be shortened significantly if the laser output is raised. Moreover, although results at the 50 μm dot size are shown in figure 4, similar results were obtained at, for example 100 μm and 30 μm, thus the record time may be reduced by increasing the laser power irrespective of the dot size.

The temperature increase of the recording medium due to heat absorption may be different even when the same laser is employed to provide a given total energy, depending on whethere for example the energy is supplied by a high output for a short time or an energy application of a low output for a long time. In case of high output for a short time, an area near the centre of a dot is raised to a high temperature, but as for the temperature at the edge of the for example 50 μm dot, the heat of the centre is diffused and the temperature is raised. On the other hand, that is low output for a longer time, the temperature of the whole of a dot is gradually raised having the maximum at the centre, and though the maximum temperature near the centre is lower than that in the former case, the temperature near the edge of the dot, is likely to be similar in both cases.

In case of the thermal melt transfer using a laser beam, the ink of the whole dot has to be melted to effect the transfer to the receiver sheet (receiver paper), the temperature near the edge of the dot is thus critical. It is considered that there is no significant difference if the total applied energy is constant, even if the output of the laser beam to be irradiated is for example a high output of 100 mW or more for a shorter time or a low output for example below 100 mW for a longer time, but as shown in the figure 4, the results obtained show that the necessary energy required to effect the transfer is significantly reduced if the output is raised.

In order to acquire further high record speed, the optical system of this invention can use plural semiconductor beam sources. For example, as shown in figure 5, the beam can be converged by 2 units of the scanning lens by using 4 units of the semiconductor laser 1 and by using 2 units of the polygon mirror 4 and the laser spot can be produced on the recording medium 7 on the drum 6. In case of figure 5, if the output of the semiconductor laser 500 mW is used, since an energy loss in the optical system is approximately 60%, a laser power corresponding to 0.8 W can be irradiated using 4 units of the laser 1.

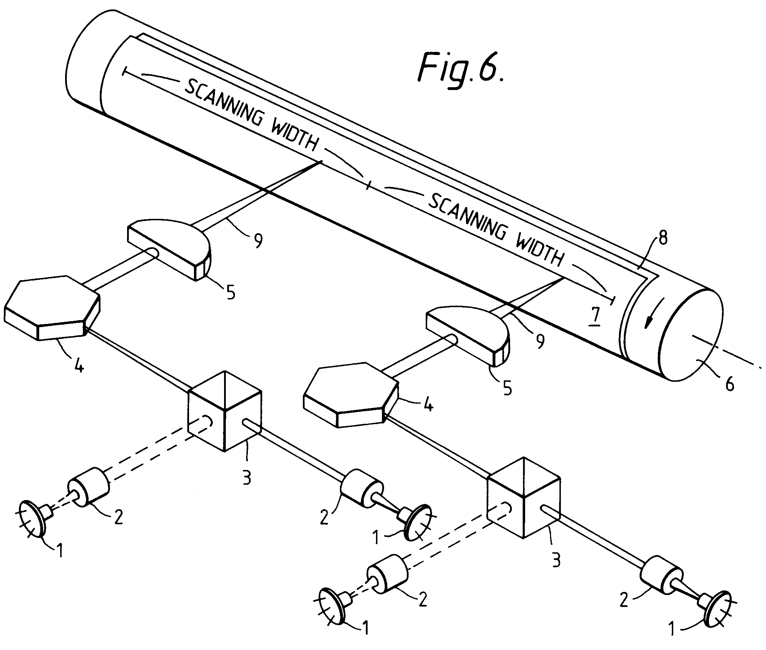

And also as shown in figure 6, 2 units of the polygon mirror 4 are used, the beams from each are converged by a scanning lens 5. The sum of the scanning width of the two lasers provides the print width (assuming that the scanning areas for each laser are adjacent). In this case, as the energy is not focused at a single spot, by converging the plural sources, the effect of the high output is diluted, but a specular curvature by the scanning lens can be reduced due to the shortening of the scanning width of each polygon mirror, thus the scanning lens system can be simplified as compared to the case of the wide scanning width, the number of the scanning lenses to be used can be decreased, and therefore an energy loss in the scanning lenses can be reduced.

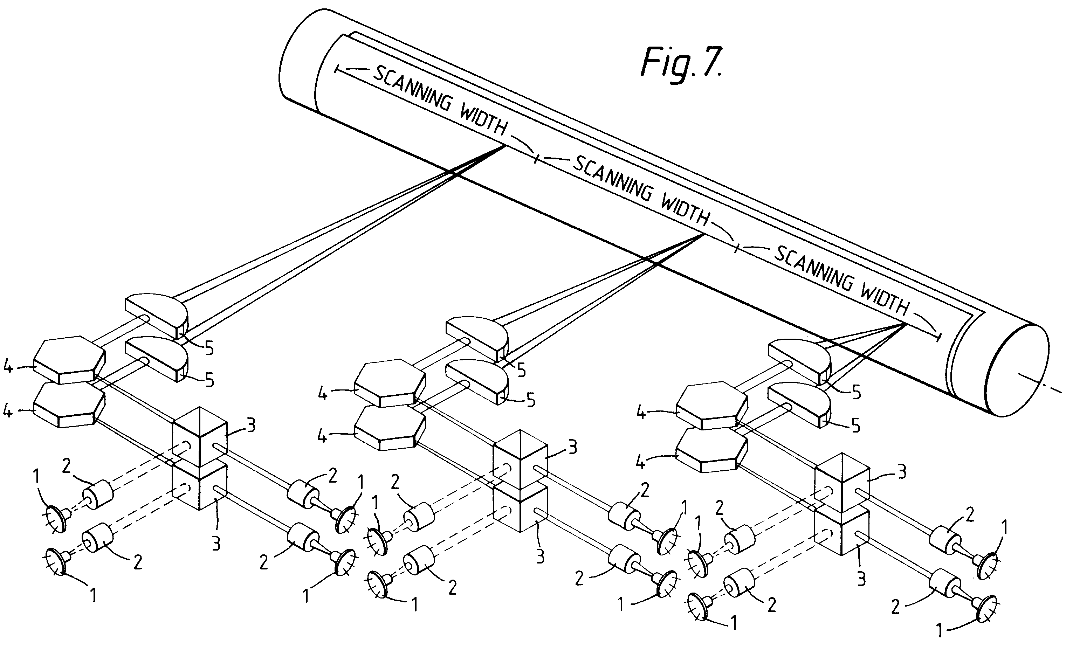

If desired the number of semiconductor lasers and polygon mirrors may be increased. An example of this invention is shown in figure 7; 12 units of the semiconductor laser 1 and 6 units of the polygon mirror 4 are used.

As for the recording medium to be used, it may be monochrome or colour, and the laser beam heat conversion layer and the ink layer may be separate, or alternatively the ink layer may also serve as the laser beam heat conversion layer. As for the latter, for example carbon black may be employed as a colouring material it being suitable due to both its high absorption of the semiconductor laser and its dark colour As regards the colour inksheet, the thermal melt transfer colour ink sheet described in Japanese patent application No 218833 of 1991 is particularly suitable.

The invention is illustrated by way of the following non-limiting examples.

Test example 1

A printer shown in figure 1 comprising two units of LQ(P)05 (output 500 mW) from STC (UK) as the semiconductor laser was used in a print test. The recording medium used as the thermal melt transfer colour inksheet is described in Japanese patent application no 218833 of 1991 and its composition is shown in the Table 1.

Table 1

Recording Medium Used in Test Example 1.

| Composition of recording medium | Thickness | Constitution | : parts |
|---|---|---|---|
| Transparent support | 6 μm | Polyethylene terephthalate | |
| beam heat conversion layer | 0.8 μm | Carbon black<br>Cellulose acetate<br>  butyrate<br>Dispersant<br>  (SOLSPERSE24000) | : 0.7<br><br>: 1.3<br>: 0.074 |
| Thermal melt transfer ink | 3.5 μm | Paraffin wax<br>Carnauba wax<br>EVA<br>Oxidised microwax<br>Dispersant<br>(SOLSPERSE24000)<br><br>Blue pigment<br>(MONASTRAL BAE) | : 42.5<br>: 14.0<br>: 9.0<br>: 10.0<br>: 1.54<br><br><br>: 6.8 |

(Note : SOLSPERSE AND MONASTRAL are trademarks of ICI).

In this test example, the laser power at the recording medium was approximately 400 mW. And the time to record an image of 18 cm x 25 cm area to a receiver paper of B5 size was 9 minutes 10 seconds.

Test example 2

A printer as shown in figure 5 comprising 4 units of LQ(P)05 (output 500 mW) from STC (UK) as the semiconductor laser was used for this print test and the same recording medium and receiver paper as used in test example 1 were employed.

The laser power at the recording medium was approximately 800 mW. And the time to record an image of 18 cm x 25 cm area on a receiver paper of B5 size was 4 minutes 10 seconds. In this test example, the laser output was twice that of the test example 1, but the record time was less than 1/2 the time observed in example 1. Thus, the results shown in figure 4 were also supported by this test example.

Test example 3

As shown in figure 7 comprising 12 units of SDL-5311 (100 mW) from SDL (USA) as the semiconductor laser was used for this print test and the same recording medium and receiver paper as used in test example 1 were employed.

The laser power at the recording medium was approximately 200 mW, and the energy loss in the scanning lenses was approximately 50% and it could be reduced when compared with the approximately 60% energy loss of the printers used in test example 1 by shortening the scanning width. The time to record an image of 18 cm x 25 cm area to a receiver paper of B5 size was 7 minutes 50 seconds.

The results show that the time to produce a record using the thermal melt transfer printing employing a high output laser beam can be sharply reduced and a printer having a practical record speed with a possible reduction of an energy loss and with a high precision and a high resolution can be realised.

## Claims

1.  A laser printer, comprising a high output semi-conductor laser beam source, a polygon mirror arranged to move the laser beam relative to a recording medium and means to effect movement of the laser beam relative to the recording medium wherein an area of the recording medium is heatable by the laser beam.

2.  A printer according to claim 1 in which the laser beam source has an output of at least 100 mW.

3.  A printer according to claim 1 in which the polygon mirror is a scanning mirror.

4.  A printer according to claim 3 which comprises means to move the recording medium is a non-parallel direction to the direction of scanning of the scanning mirror whereby an area of the inksheet is heatable by the laser beam.

5.  A printer according to any preceding claim comprising a plurality of scanning polygon mirrors arranged such that the scanning widths of the mirrors are substantially parallel and/or coincident.

6.  A printer according to claim 4 in which the scanning mirrors are arranged such that the scanning widths are adjacent end to end and the sum of the scanning widths of the mirrors is the total printable width.

7.  A printer according to any preceding claim in which each laser beam passes through a polygon scanning mirror.

8.  A method of thermal melt transfer printing which comprises placing a thermal melt transfer ink sheet comprising a substrate having an ink layer on one side in register with a receiver sheet with the ink layer facing the receiver sheet, heating pre-determined portions of the ink layer by means of a laser beam which is moveable relative to the ink sheet by means of a scanning polygon mirror in response to a pre-determined signal to effect thermal melt transfer of said portions of the ink layer to the receiver sheet wherein the laser beam is produced by a high output semi-conductor laser beam source.

9.  A method according to claim 8 which comprises moving the ink sheet and receiver sheet in a non-parallel direction to the direction of scanning of the scanning mirror whereby an area of the inksheet is heatable.

10. A method according to claim 8 or claim 9 in which the laser beam source has an output of at least 100 mW.

11. A method according to any of claims 8 to 10 in which pre-determined portions of the ink layer are heated by a plurality of laser beams, each being moveable relative to the ink layer by a scanning polygon mirror, the said mirrors being arranged such that the scanning widths are adjacent end to end and the sum of the scanning widths is the total printable width.

*Fig.1.*

*Fig.2.*

*Fig.3.*

BEFORE TRANSFER

AFTER TRANSFER

# Fig.4.

NECESSARY ENERGY TO GIVE INK TRANSFER OF A 50μm DOT SIZE (J/cm2)

LASER POWER ON PLANE OF RECORDING MEDIUM (W)

# Fig.5.

Fig.6.

*Fig.7.*

SCANNING WIDTH

SCANNING WIDTH

SCANNING WIDTH

EP 0 542 544 A2